# EUROPEAN PATENT APPLICATION

(11) **EP 4 155 061 A1**
(43) Date of publication of application: **29.03.2023**
(21) Application number: 22168919.3
(22) Date of filing: 20.04.2022
(51) Int. Cl.: B29C 70/38, B29C 51/00

(54) **EFFICIENT AUTOMATIC INTELLIGENT MACHINE**

(30) Priority: 24.09.2021 CN 202111124252
(71) Applicant: Disaifu Innovation Technology (Shenzhen) Co., Ltd., Shenzhen, Guangdong 518000 (CN)
(72) Inventor: HUANG, Wenjie, Shenzhen,Guangdong (CN); XIE, Yangdi, Shenzhen,Guangdong (CN); ZHANG, Xiangjun, Shenzhen,Guangdong (CN); CUI, Fengfang, Shenzhen,Guangdong (CN)
(74) Representative: Sun, Yiming

(57) **Abstract**

Disclosed is an efficient automatic intelligent fiber placement machine, which includes a yarn feeding device (1), a winding device (2) positioned at one end of the yarn feeding device (1), a mold plate conveying device (3) positioned below the winding device (2), a preforming device (4) positioned above the winding device (2), and a thermoforming device (5) positioned close to the mold plate conveying device (3); the mold plate conveying device (3) is used for holding a mold plate (6) placed thereon, and the mold plate (6) is provided with a plurality of surrounding columns. The fiber placement machine is an integrated equipment including yarn feeding device (1), winding device (2), mold plate conveying device (3), preforming device (4), thermoforming device (5) and discharging device (7), which may realize a whole process of feeding, winding, thermoforming and discharging, with a highly automated operation, high efficiency, and low labor cost. The equipment is able to produce lay-ups of different shapes and configurations through various winding trajectory.

## Description

### FIELD OF TECHNOLOGY

The present disclosure relates to the winding and forming of knitwear, in particular, to an efficient automatic intelligent braiding machine.

### BACKGROUND TECHNOLOGY

Mesh knitted products, such as the mesh surface of shoes, are formed by winding the threads first into required shape and structure followed by thermoforming. However, most of the existing mechanisms for winding and forming the threads exploit robotic arms for automatic thread clamping and winding, which is complicated, and occupies a large space with low winding efficiency, high manufacturing cost and low economic benefit.

### SUMMARY

An objective of the present disclosure is to provide an efficient automatic intelligent braiding machine, which is an integrated equipment including yarn feeding device, winding device, mold plate conveying device, preforming device, thermoforming device and discharging device. It can realize a whole process of feeding, winding, thermoforming and discharging, with a highly automated operation, high efficiency, and low labor cost. The equipment is able to produce knitted fabrics of different shapes and configurations through various winding trajectory.

To achieve the above-mentioned objectives, the following technical proposals are provided,
an efficient automatic intelligent braiding machine, including a yarn feeding device, a winding device positioned at one end of the yarn feeding device, a mold plate conveying device positioned below the winding device, a preforming device positioned above the winding device, and a thermoforming device positioned close to the mold plate conveying device; the mold plate conveying device is used for holding a mold plate placed thereon, and the mold plate is provided with a plurality of surrounding columns; the winding device is used for winding yarns of different colors from the yarn feeding device around the surrounding columns according to a predetermined trajectory, the preforming device is used for pressing the yarn wound around the surrounding columns by the winding device to produce a preformed product; the mold plate conveying device is also used for conveying the mold plate below the thermoforming device, and the thermoforming device is used for hot pressing the preformed product on the mold plate.

Further, the yarn feeding device includes a thread mounting frame, an anti-breakage mechanism arranged at one end of the thread mounting frame, and a yarn taking mechanism arranged near the anti-breakage mechanism; a plurality of bobbins with the yarn wound thereon are mounted on the thread mounting frame, the yarn taking mechanism includes a plurality of winding head modules, and each of the winding head modules is arranged corresponding to one of the bobbins; the yarn on the bobbins passes through the anti-breakage mechanism and the winding head modules in sequence, and the winding device is used for transferring the winding head modules in order to wind the yarn on the surrounding columns.

Further, the anti-breakage mechanism includes an anti-breakage mounting frame, and a plurality of anti-breakage assemblies mounted on the anti-breakage mounting frame, and each of the plurality of anti-breakage assemblies corresponds to one of the bobbins and one of the winding head modules, and includes a yarn breakage detector and a tensioner.

Further, the winding head modules include a fixing plate, a first electromagnet assembly mounted on one side of the fixing plate, and a magnetic winding head arranged on the first electromagnet assembly.

Further, the yarn taking mechanism also includes a plurality of thread end fixing modules, and a plurality of thread fixing columns mounted on the mold plate, the thread end fixing modules are used for fixing a thread end passing through the winding head modules.

Further, each of the thread end fixing modules is correspondingly arranged on one side of each of the winding head modules, and the thread end fixing modules include a pressing cylinder, a pressing block connected with an output shaft of the pressing cylinder, and a pressing post arranged close to the pressing block. The yarn taking mechanism further includes a plurality of cutting modules, each correspondingly positioned between one of the thread fixing columns and one of the thread end fixing modules.

Further, the winding device includes a first translation mechanism, a second translation mechanism slidably connected with and perpendicular to the first translation mechanism, a first lifting mechanism slidably connected with and perpendicular to the second translation mechanism, and a second electromagnet assembly mounted on the first lifting mechanism.

Further, the mold plate conveying device includes two parallel first limiting guide rails spaced apart, a third translation mechanism disposed along a length direction of the first limiting guide rails, and a pushing plate connected with the third translation mechanism for pushing the mold plate along the first limiting guide rails.

Further, the preforming device includes a second lifting mechanism and a first pressing plate connected with the second lifting mechanism; a plurality of avoidance holes are provided on a bottom part of the first pressing plate corresponding to the surrounding columns on the mold plate; the thermoforming device includes a heating plate assembly arranged below a position between the two first limiting guide rails and located at one end thereof, a third lifting mechanism arranged above the heating plate assembly, and a hot-pressing plate assembly connected with the third lifting mechanism.

Further, the high-efficiency automatic intelligent knitting machine further includes a discharging device for transferring and discharging a hot-pressed product produced by the thermoforming device.

Advantageous effects of the above-mentioned proposals provided by the present disclosure are as follows,
(1) the yarn feeding device, winding device, mold plate conveying device, preforming device, thermoforming device and discharging device are integrated, which may realize a whole process of feeding, winding, thermoforming and discharging, with a highly automated operation, high efficiency, and low labor cost. The equipment is able to produce knitted fabrics of different shapes and configurations through various winding trajectory;
(2) the magnetic winding head is magnetically attached with the first electromagnet assembly, and the winding device attracts different magnetic winding heads through the second electromagnet assembly to complete the winding process at different stages, which is convenient to use. The anti-breakage mechanism prevents the yarn from breaking during winding and ensure the continuity of drawing of the yarn;
(3) the cutting module can automatically cut the yarn after the winding is completed, so that the mold plate conveying device can transfer the mold plate;
(4) a plurality of limiting mechanisms limit and fix the mold plate, so that the mold plate is pressed by the preforming device and the thermoforming device. At the same time, a first positioning column is provided on the top of the mold plate, for guiding the pressing plate to ensure the accuracy when it is pressed downward;
(5) a foam cotton is used for hot pressing, which may relieve the pressure, and at the same time, allows the surrounding columns to pass through to form avoidance holes, thereby ensuring a close fitting during pressing process.

### BRIEF DESCRIPTION OF THE DRAWINGS

Fig. 1 is a perspective view of the present disclosure;
FIG. 2 is a perspective view of Fig. 1 omitting the rack;
Fig. 3 is a perspective view of Fig. 2 omitting the winding device, the preforming device and the thermoforming device;
Fig. 4 is a partially enlarged view of part A of Fig. 3;
Fig. 5 is a perspective view of Fig. 3 from another perspective;
Fig. 6 is a perspective view of the winding device of the present disclosure;
Fig. 7 is a perspective view of the thermoforming device of the present disclosure; and
Fig. 8 is a perspective view of the preforming device of the present disclosure.

### Reference signs

1 yarn feeding device, 2 winding device,
3 mold plate conveying device, 4 preforming device,
5 thermoforming device, 6 mold plate,
7 discharging device, 8 rack,
9 installation platform, 11 thread mounting frame,
12 anti-breakage mechanism, 13 yarn taking mechanism,
14 bobbin, 21 first translation mechanism,
22 second translation mechanism, 23 first lifting mechanism,
24 second electromagnet assembly, 31 first limiting guide rail,
32 third translation mechanism, 33 pushing plate,
34 limiting mechanism, 41 second lifting mechanism,
42 first pressing plate, 43 avoidance hole,
44 first positioning column, 51 heating plate assembly,
52 third lifting mechanism, 53 hot-pressing plate assembly,
71 second limiting guide rail, 72 translation mechanism,
73 discharging push plate, 121 anti-breakage mounting frame,
122 yarn breakage detector, 123 tensioner,
131 fixing plate, 132 first electromagnet assembly,
133 magnetic winding head, 134 thread fixing column,
135 cutting module, 136 winding nozzle,
137 pressing cylinder, 138 pressing block,
139 pressing post

### DETAILED DESCRIPTION OF THE EMBODIMENTS

The present disclosure will be further described in conjunction with the accompanying drawings and detailed embodiments.

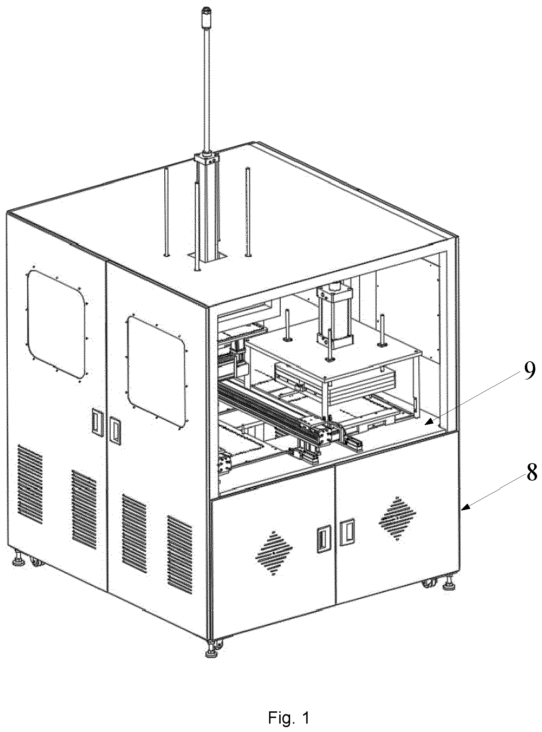

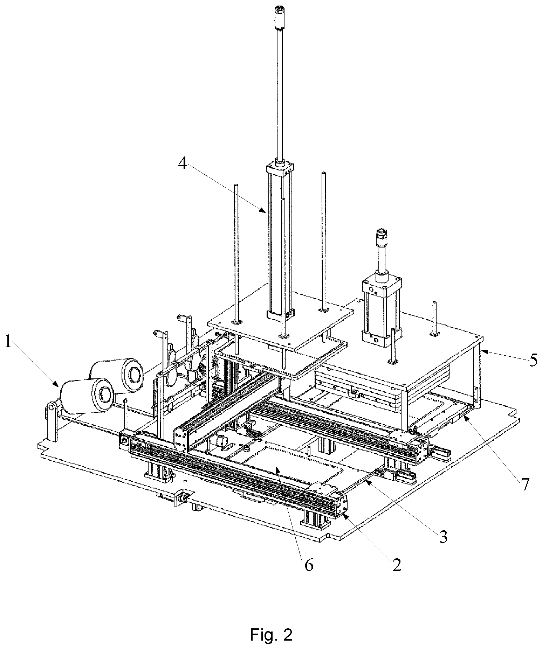

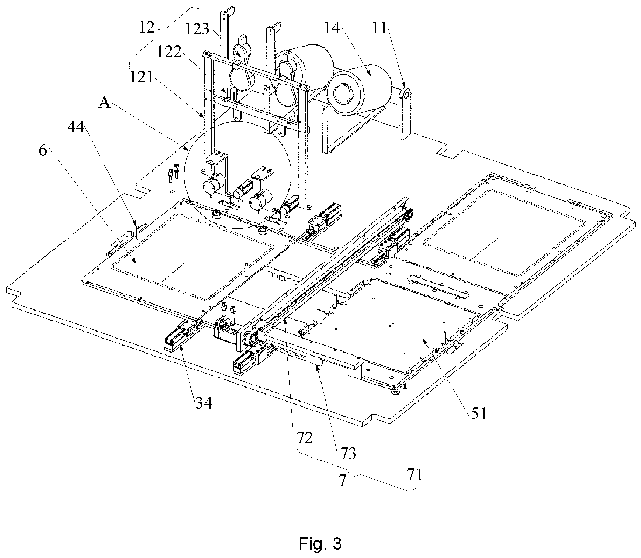

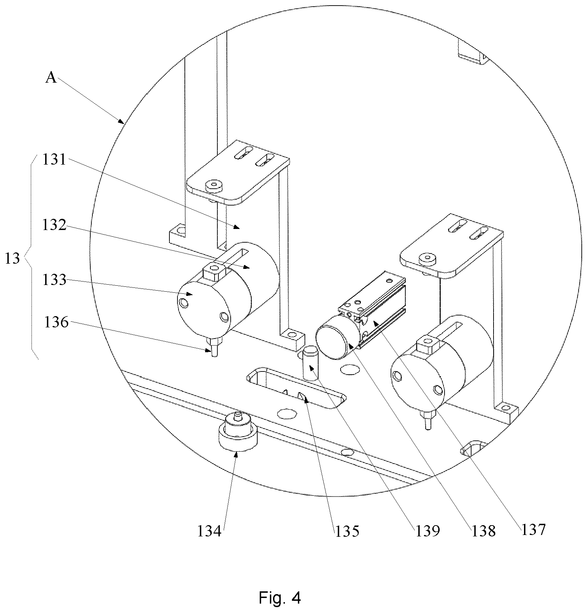

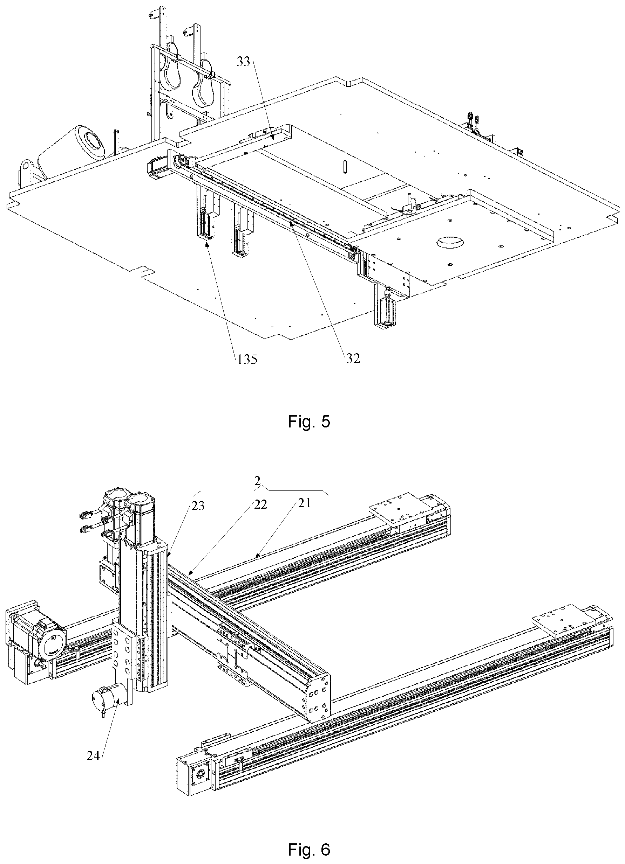

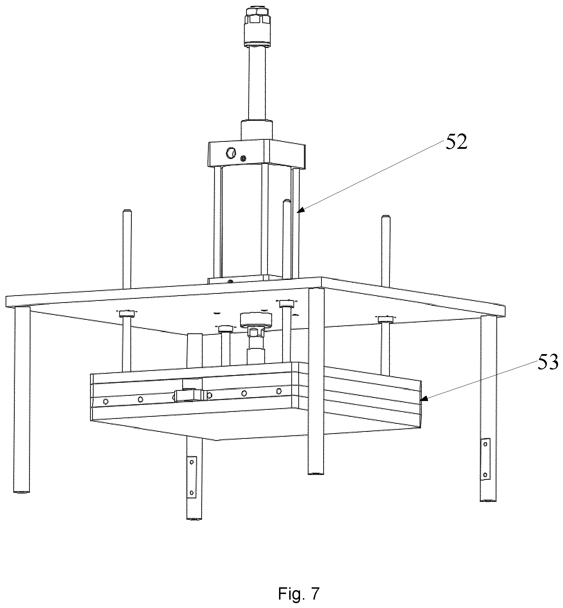

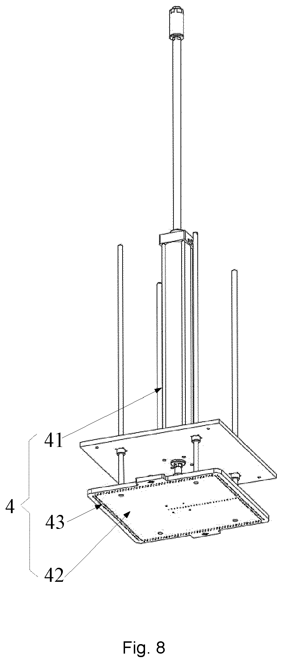

Referring to Figs. 1 to 8, the present disclosure provides an efficient automatic intelligent braiding machine, which includes a yarn feeding device 1, a winding device 2 positioned at one end of the yarn feeding device 1, a mold plate conveying device 3 positioned below the winding device 2, a preforming device 4 positioned above the winding device 2, and a thermoforming device 5 positioned close to the mold plate conveying device 3; the mold plate conveying device 3 is used for holding a mold plate 6 placed thereon, and the mold plate 6 is provided with several surrounding columns; the winding device 2 is used for winding the yarns of different colors from the yarn feeding device 1 on the surrounding columns according to a predetermined trajectory, the preforming device 4 is used for pressing the yarn wound around the surrounding columns by the winding device 2 to form a primary product; the mold plate conveying device 3 is also used for conveying the mold plate 6 underneath the thermoforming device 5, and the thermoforming device 5 is used for hot pressing the primary product formed on the mold plate 6.

The yarn feeding device 1 includes a thread mounting frame 11, an anti-breakage mechanism 12 arranged at one end of the thread mounting frame, and a yarn taking mechanism 13 arranged near the anti-breakage mechanism 12; several bobbins 14 with wound yarn thereon are mounted on the thread mounting frame 11, the yarn taking mechanism 13 includes several winding head modules, and each winding head module is arranged corresponding to each of the bobbins 14 respectively; the yarn on the bobbins 14 passes through the anti-breakage mechanism 12 and the winding head module in sequence, and the winding device 2 is used for transferring the winding head module in order to wind the yarn on the surrounding columns. The anti-breakage mechanism 12 includes an anti-breakage mounting frame 121, and a plurality of anti-breakage assemblies mounted on the anti-breakage mounting frame 121, and each of the plurality of anti-breakage assemblies corresponds to one of the bobbins 14 and one of the winding head modules, and includes a yarn breakage detector 122 and a tensioner 123. The winding head module includes a fixing plate 131, a first electromagnet assembly 132 mounted on one side of the fixing plate 131, and a magnetic winding head 133 arranged on the first electromagnet assembly 132.

The yarn taking mechanism 13 also includes a number of thread end fixing modules, and a plurality of thread fixing columns 134 mounted on the mold plate 6, the thread end fixing modules are used for fixing a thread end passing through the winding head module. Each of the thread end fixing modules is correspondingly arranged on one side of each winding head module, and the thread end fixing module includes a pressing cylinder 137, a pressing block 138 connected with an output shaft of the pressing cylinder 137, and a pressing post 139 arranged close to the pressing block 138. The yarn taking mechanism 13 further includes a plurality of cutting modules 135, each correspondingly positioned between each of the thread fixing columns 134 and each of the thread end fixing modules. The winding device 2 includes a first translation mechanism 21, a second translation mechanism 22 slidably connected with and perpendicular to the first translation mechanism 21, a first lifting mechanism 23 slidably connected with and perpendicular to the second translation mechanism 22, and a second electromagnet assembly 24 mounted on the first lifting mechanism 23. The mold plate conveying device 3 includes two first limiting guide rails 31 arranged in parallel and spaced apart, a third translation mechanism 32 disposed along a length direction of the first limiting guide rails 31, and a pushing plate 33 connected with the third translation mechanism 32 for pushing the mold plate 6 along the first limiting guide rails 31.

The preforming device 4 includes a second lifting mechanism 41 and a first pressing plate 42 connected with the second lifting mechanism 41; a plurality of avoidance holes 43 are provided on a bottom part of the first pressing plate 42 corresponding to the surrounding columns on the mold plate 6. The thermoforming device 5 includes a heating plate assembly 51 arranged below a position between the two first limiting guide rails 31 and located at one end thereof, a third lifting mechanism 52 arranged above the heating plate assembly 51, and a hot-pressing plate assembly 53 connected with the third lifting mechanism 52. The high-efficiency automatic intelligent knitting machine further includes a discharging device 7 for transferring and discharging the hot-pressed product produced by the thermoforming device 5.

The working principle of the present invention will be described below.

Referring back to Figs. 1 to 8, in the present embodiment, the braiding machined further includes a rack 8, an installation platform 9 is arranged in the rack 8, and the preforming device 4 is installed on the top of the rack 8. The yarn feeding device 1, the winding device 2, the mold plate conveying device 3, the thermoforming device 5 and the discharging device 7 are installed on the installation platform 9. A front side of the rack 8 is provided with a cabinet door, a three-color indicator light is provided on the top of the rack 8, and wheels and foot cups are provided underneath the rack 8.

In the yarn feeding device 1 of the present embodiment, the number of bobbins 14 is two (a plurality of bobbins 14 may also be provided, and the types and colors of the yarns on the bobbins 14 may be different, so as to produce different types of knitwear, and other types of thread may be used), and two first threading frames are installed on the thread mounting frame 11. Each of the first threading frames is provided with a first threading hole, through which the yarn from each of the bobbins 14 passes. The number of the anti-breakage assemblies of the anti-breakage mechanism 12 is two, each including a yarn breakage detector 122 and a tensioner 123, and the yarn passing through the first threading hole passes through the yarn breakage detector 122 and the tensioner 123 in sequence. This may avoid yarn breakage and ensure the continuity of drawing of the yarn. The number of the winding head modules is two, respectively located below each of the anti-breakage assemblies. The magnetic winding head 133 is made of magnetic material, and is attachable to the first electromagnet assembly 132. A second threading hole is provided on the top of the magnetic winding head 133, and a winding nozzle 136 is provided on the bottom of the magnetic winding head 133, and the yarn passing through the tensioner 123 is lead to pass through the second threading hole and the winding nozzle 136 in sequence. Then, a thread end of the yarn passing through the winding nozzle 136 is wound between the pressing block 138 and the pressing post 139, and the pressing cylinder 137 drives the pressing block 138 to move towards the pressing post 139 to press and fix the thread end. When winding starts, the winding device 2 attracts the magnetic winding head 133, so as to wind the yarn around the surrounding columns on the mold plate 6 according to a preset trajectory, which is simple and efficient.

The thread fixing columns 134 are provided, as the yarn on each magnetic winding head 133 cannot be consumed at one time during the winding process. When the winding device 2 completes a process with one of the magnetic winding heads 133, the yarn is wound around one of the thread fixing columns 134 (which includes a fixing shaft and a fastening cover sleeved thereon, the yarn is manually wound around the fixing shaft, and the fastening cover is pressed and fastened) to be fixed until the next process. A cutting module 135 is further provided between each of the thread fixing columns 134 and each of the thread end fixing modules, for cutting the yarn extending between the magnetic winding head 133 and the surrounding columns after the winding is completed, so as to convey the mold plate 6 to the thermoforming device 5 by the mold plate conveying device 3. In this embodiment, the cutting module 135 includes a cutting mounting plate mounted on the bottom of the installation platform 9, a cutting lifting cylinder arranged vertically on the cutting mounting plate, and a scissor assembly connected with the cutting lifting cylinder. A first through-hole is provided on the installation platform 9, and the cutting lift cylinder drives the scissor assembly to pass through the first through-hole in order to cut the yarn.

The winding device 2 includes a first translation mechanism 21, a second translation mechanism 22, and a first lifting mechanism 23 arranged on the installation platform 9, so that the second electromagnet assembly 24 is driven to perform 3-axis motion, and attracts the magnetic winding head 133 to perform winding according to the predetermined trajectory. In this embodiment, the first translation mechanism 21, the second translation mechanism 22 and the first lifting mechanism 23 are all linear motor assemblies. By cutting off power supplied to the first electromagnet assembly 132 and supplying power to the second electromagnet assembly 24, the magnetic winding head 133 is attracted to proceed with the winding process.

The second lifting mechanism 41 of the preforming device 4 includes a first mounting plate mounted on the top of the rack 8, a first pressing cylinder and a plurality of first lifting guide columns mounted on the first mounting plate. The top part of the first pressing plate 42 is connected with the first pressing cylinder and the first lifting guide columns, and the bottom part of the first pressing plate 42 is provided with a number of avoidance holes 43 which correspond to the surrounding columns on the mold plate 6. After the yarn is wound around the surrounding columns by the winding device 2 according to the preset trajectory, the first pressing cylinder drives the first pressing plate 42 to move downward, so as to press the yarn on the surrounding columns, thereby preforming the knitwear (the knitwear is three-dimensional during winding, and is in a flat surface after being pressed). In addition, a first positioning column 44 is provided at each side of the top part of the mold plate 6, and first positioning holes are provided at the bottom part of the first pressing plate 42 corresponding to the first positioning columns 44, so that the first pressing plate 42 is guided when pressing downward to ensure accuracy.

The two first limiting guide rails 31 of the mold plate conveying device 3 are arranged on the top of the installation platform 9 in parallel and spaced apart, and a first sliding hole is provided on the top of the installation platform 9 between the two first limiting guide rails 31. The first sliding hole is opened along the length direction of the first limiting guide rails 31, and the third translation mechanism 32 includes a first synchronous belt module installed on the bottom part of the installation platform 9 along the length direction of the first limiting guide rails 31, a first slider connected with the first synchronous belt module, and a first motor for driving the first synchronous belt module. The pushing plate 33 is mounted on the first slider, and a pushing block extending upward through the first sliding hole is provided on the top of the pushing plate 33. The pushing block is driven by the first synchronous belt module to push the mold plate 6 along the first limiting guide rails 31. In addition, the mold plate conveying device 3 also includes a plurality of limiting mechanisms 34 mounted on one side of the first limiting guide rails 31. The limiting mechanisms 34 include a limiting cylinder and a limiting block connected with the limiting cylinder. The first limiting guide rail 31 is provided with a first notch, and the limiting cylinder drives the limiting block to protrude from the first notch, for limiting and fixing the mold plate 6 in order to be pressed by the preforming device 4 and the thermoforming device 5.

The heating plate assembly 51 of the thermoforming device 5 is arranged at one end of the first sliding hole, and includes a heating plate and plurality of heating tubs installed in the heating plate. The third lifting mechanism 52 includes a hot-pressing frame mounted above the heating plate on the installation platform 9, and a second pressing cylinder and a plurality of second lifting guide columns mounted on the hot-pressing frame. The hot-pressing plate assembly 53 is connected with the second pressing cylinder and the second lifting guide columns, and the hot-pressing plate assembly 53 includes a connecting plate, a plurality of heat insulation plates and foam cotton arranged in sequence from top to bottom. When the product mold plate 6 is moved onto the heating plate, the mold plate 6 is heated by the heating tubes, and then the second pressing cylinder drives the foam cotton to press down, so that the preformed product on the mold plate 6 is hot-pressed. This allows high production efficiency. The foam cotton is used for hot pressing, which may relieve the pressure applied, and at the same time, allow penetration of the surrounding columns to form avoidance holes 43 in order to ensure a close fitting.

The discharging device 7 includes two second limiting guide rails 71 arranged in parallel and spaced apart on the installation platform 9, a discharging translation mechanism 72 arranged on the installation platform 9 along the length direction of the second limiting guide rails 71, and a discharging push plate 73 connected with the discharging translation mechanism 72. The discharging translation mechanism 72 operates by means of the synchronous belt, which drives the discharging push plate 73 to push the mold plate 6 to slide along the second limiting guide rails 71 for discharging.

An operating process of the present disclosure is as follows,
(1) the winding device 2 attracts the magnetic winding head 133, and winds the yarn on the surrounding columns according to the preset trajectory;
(2) the preforming device 4 is pressed down to produce a preformed product after the winding is completed;
(3) the mold plate conveying device 3 transfers the mold plate 6 below the thermoforming device 5, and the thermoforming device 5 hot-presses the preformed product; and
(4) the hot-pressed product is transferred and discharged by the discharging device 7.

The above are merely examples of the present disclosure, but are not intended to limit the scope of the present disclosure. Various equivalent changes or substitutions may be made within the technical scope disclosed in the present disclosure by those skilled in the art, and these changes or substitutions shall fall within the scope of protection of the present disclosure.

## Claims

1. An efficient automatic intelligent braiding machine, comprising:
a yarn feeding device;
a winding device positioned at one end of the yarn feeding device;
a mold plate conveying device positioned below the winding device;
a preforming device positioned above the winding device; and
a thermoforming device positioned close to the mold plate conveying device,
wherein the mold plate conveying device is used for holding a mold plate placed thereon, and the mold plate is provided with a plurality of surrounding columns, the winding device is used for winding yarns of different colors from the yarn feeding device around the surrounding columns according to a predetermined trajectory, the preforming device is used for pressing the yarn wound around the surrounding columns by the winding device to produce a preformed product, the mold plate conveying device is also used for conveying the mold plate below the thermoforming device, and the thermoforming device is used for hot pressing the preformed product on the mold plate.

2. The efficient automatic intelligent braiding machine according to claim 1, wherein the yarn feeding device comprises a thread mounting frame, an anti-breakage mechanism arranged at one end of the thread mounting frame, and a yarn taking mechanism arranged near the anti-breakage mechanism, a plurality of bobbins with the yarn wound thereon are mounted on the thread mounting frame, the yarn taking mechanism includes a plurality of winding head modules, and each of the winding head modules is arranged corresponding to one of the bobbins, the yarn on the bobbins passes through the anti-breakage mechanism and the winding head modules in sequence, and the winding device is used for transferring the winding head modules in order to wind the yarn on the surrounding columns.

3. The efficient automatic intelligent braiding machine according to claim 2, wherein the anti-breakage mechanism comprises an anti-breakage mounting frame, and a plurality of anti-breakage assemblies mounted on the anti-breakage mounting frame, each of the plurality of anti-breakage assemblies corresponds to one of the bobbins and one of the winding head modules, and includes a yarn breakage detector and a tensioner.

4. The efficient automatic intelligent braiding machine according to claim 3, wherein the winding head modules comprise a fixing plate, a first electromagnet assembly mounted on one side of the fixing plate, and a magnetic winding head arranged on the first electromagnet assembly.

5. The efficient automatic intelligent braiding machine according to claim 4, wherein the yarn taking mechanism also comprises a plurality of thread end fixing modules, and a plurality of thread fixing columns mounted on the mold plate, the thread end fixing modules are used for fixing a thread end passing through the winding head modules.

6. The efficient automatic intelligent braiding machine according to claim 5, wherein each of the thread end fixing modules is correspondingly arranged on one side of each of the winding head modules, and the thread end fixing modules include a pressing cylinder, a pressing block connected with an output shaft of the pressing cylinder, and a pressing post arranged close to the pressing block, the yarn taking mechanism further includes a plurality of cutting modules, each correspondingly positioned between one of the thread fixing columns and one of the thread end fixing modules.

7. The efficient automatic intelligent braiding machine according to claim 1, wherein the winding device comprises a first translation mechanism, a second translation mechanism slidably connected with and perpendicular to the first translation mechanism, a first lifting mechanism slidably connected with and perpendicular to the second translation mechanism, and a second electromagnet assembly mounted on the first lifting mechanism.

8. The efficient automatic intelligent braiding machine according to claim 1, wherein the mold plate conveying device comprises two parallel first limiting guide rails spaced apart, a third translation mechanism disposed along a length direction of the first limiting guide rails, and a pushing plate connected with the third translation mechanism for pushing the mold plate along the first limiting guide rails.

9. The efficient automatic intelligent braiding machine according to claim 8, wherein the preforming device comprises a second lifting mechanism and a first pressing plate connected with the second lifting mechanism; a plurality of avoidance holes are provided on a bottom part of the first pressing plate corresponding to the surrounding columns on the mold plate, the thermoforming device includes a heating plate assembly arranged below a position between the two first limiting guide rails and located at one end thereof, a third lifting mechanism arranged above the heating plate assembly, and a hot-pressing plate assembly connected with the third lifting mechanism.

10. The efficient automatic intelligent braiding machine according to claim 1, further comprising a discharging device for transferring and discharging a hot-pressed product produced by the thermoforming device.
